# EUROPÄISCHE PATENTSCHRIFT

(11) **EP 2 910 685 B1**
(45) Veröffentlichungstag und Bekanntmachung des Hinweises auf die Patenterteilung: **29.03.2017**
(21) Anmeldenummer: 15154775.9
(22) Anmeldetag: 12.02.2015
(51) Int. Cl.: E02B 8/08

(54) **Fischlift und Verfahren zum Reinigen eines Fischlifts**
Fish lift and method for cleaning a fish lift
Ascenseur à poissons et procédé de nettoyage d'un ascenseur à poissons

(30) Priorität: 13.02.2014 DE 102014001824
(43) Veröffentlichungstag der Anmeldung: 26.08.2015
(73) Patentinhaber: Baumann, Georg, 88239 Wangen (DE)
(72) Erfinder: Baumann, Georg, 88239 Wangen (DE)
(74) Vertreter: Otten, Roth, Dobler & Partner mbB Patentanwälte

(56) Entgegenhaltungen:
- KR-B1- 101 067 725
- SU-A1- 550 473
- US-A- 1 591 450
- US-A- 4 431 340
- US-A- 4 904 114

## Beschreibung

Die Erfindung betrifft einen Fischlift und ein Verfahren zum Reinigen bzw. zum Betrieb eines Fischlifts gemäß dem Oberbegriff des Anspruchs 1 bzw. des Anspruchs 13 bzw. 14. Aus der US 4,431,340 ist ein Fischlift zum Transport von Fischen zwischen einem Oberwasser einer Staustufe und einem Unterwasser der Staustufe bekannt, wobei der Fischlift einen Schacht und einen Behälter umfasst, wobei der Schacht eine unter einem Niveau des Unterwassers liegende untere Öffnung mit einem unteren Schleuseneingang umfasst, wobei der Behälter zwischen einer oberen Stellung und einer unteren Stellung verfahrbar ist, wobei der Behälter als Schwimmbehälter ausgebildet ist, wobei der Schwimmbehälter auf seinem Weg zwischen der oberen Stellung und der unteren Stellung in einem im Schacht unter dem Behälter eingeschlossenen Wasservolumen schwimmt, wobei der Behälter durch Wasserabfluss aus dem im Schacht eingeschlossenen Wasservolumen abgesenkt wird oder wobei der Behälter durch Wasserzufluss zu dem im Schacht eingeschlossenen Wasservolumen angehoben wird.

Demnach offenbart die US 4,431,340 die Merkmale der Oberbegriffe der Ansprüche 1, 13 und 14.

Weiterhin ist auch aus der US 1,591,450 ein Fischlift zum Transport von Fischen zwischen einem Oberwasser einer Staustufe und einem Unterwasser der Staustufe bekannt, wobei der Fischlift einen Schacht und einen Behälter umfasst, wobei der Schacht eine unter einem Niveau des Unterwassers liegende untere Öffnung mit einem unteren Schleuseneingang umfasst, wobei der Behälter zwischen einer oberen Stellung und einer unteren Stellung verfahrbar ist, wobei der Behälter als Schwimmbehälter ausgebildet ist, wobei der Schwimmbehälter auf seinem Weg zwischen der oberen Stellung und der unteren Stellung in einem im Schacht unter dem Behälter eingeschlossenen Wasservolumen schwimmt, wobei der Behälter durch Wasserabfluss aus dem im Schacht eingeschlossenen Wasservolumen abgesenkt wird oder wobei der Behälter durch Wasserzufluss zu dem im Schacht eingeschlossenen Wasservolumen angehoben wird.

Es ist Aufgabe der Erfindung, einen Fischlift vorzuschlagen, bei welchem ein störungsfreies Heben und Senken des Behälters auch bei einem extremen Wasserstand des Unterwassers gewährleistet ist. Weiterhin ist es Aufgabe der Erfindung ein Verfahren zum Betrieb eines Fischlifts in einer derartigen Extremsituation sowie ein Verfahren zum Reinigen eines Fischlifts vorzuschlagen.

Diese Aufgabe wird ausgehend von den Merkmalen des Oberbegriffs des Anspruchs 1 bzw. 13 bzw. 14 durch die kennzeichnenden Merkmale des Anspruchs 1 bzw. des Verfahrensanspruch 13 bzw. 14 gelöst. In den Unteransprüchen sind vorteilhafte und zweckmäßige Weiterbildungen angegeben.

Der erfindungsgemäße Fischlift umfasst eine Pumpeinrichtung, die als Wasserabflusseinrichtung ausgebildet ist. Durch eine Pumpeinrichtung, die als Wasserabflusseinrichtung arbeitet, ist es möglich, durch ein Abpumpen des unter dem Behälter in dem Schacht eingeschlossenen Wasservolumens, den Behälter auch bei erhöhtem Wasserstand des Unterwassers in seine untere Stellung zu fahren und in dieser Stellung zu halten. Hierdurch kann der Fischlift während eines erhöhten Wasserstandes des Unterwassers in Betrieb bleiben und den Fischen weiterhin den Weg vom Oberwasser ins Unterwasser und umgekehrt ermöglich. Somit können die hinsichtlich der Betriebstage pro Jahr zu erfüllenden Auflagen ohne Schwierigkeiten eingehalten werden. Weiterhin bietet ein Betrieb der Pumpeinrichtung als Wasserzuflusseinrichtung die Möglichkeit, den Druck in dem unter dem Behälter eingeschlossenen Wasservolumen zu erhöhen, so dass bei einem Betrieb der Pumpeinrichtung bei in der oberen Stellung stehendem Behälter ein zwischen dem Behälter und dem Schacht liegender Ringspalt durch auf Grund des erhöhten Drucks an dem Behälter vorbeiströmendes Wasser gereinigt werden kann. Eine derartige Reinigung kann automatisch durch eine entsprechende Programmierung einer Kontrolleinrichtung des Fischlifts durchgeführt werden und ist deshalb im Gegensatz zu einer händisch durchgeführten Reinigung äußerst kostengünstig.

Weiterhin ist in einer bevorzugten Ausführungsform vorgesehen, die Pumpeinrichtung in ihrer Leistungsfähigkeit derart auszulegen, dass von dieser aus dem im Schacht eingeschlossenen Wasservolumen ein Volumenstrom abgeführt wird, welcher größer ist als ein Volumenstrom, welcher aus dem Oberwasser dem eingeschlossenen Wasservolumen zuströmt. Hierdurch ist ein vollständiges Absenken des Behälters bei erhöhtem Wasserstand des Unterwassers auch dann sicher gestellt, wenn durch Leckstellen Oberwasser in den Schacht eindringt.

Bevorzugt ist es auch vorgesehen, die Pumpeinrichtung in ihrer Leistungsfähigkeit derart auszulegen, dass von dieser dem im Schacht eingeschlossenen Wasservolumen ein Volumenstrom zugeführt wird, welcher größer ist als ein Volumenstrom, welcher aus dem eingeschlossenen Wasservolumen in das Unterwasser abströmt. Hierdurch ist ein Freispülen des Ringspalts zwischen dem Behälter und dem Schacht in der oberen Stellung des Behälters auch dann möglich, wenn aus dem eingeschlossenen Wasservolumen durch Leckstellen Wasser in das Unterwasser abfließt.

Bevorzugt weist der Schwimmbehälter einen Auftrieb auf, welcher derart bemessen ist, dass ein Transportraum des Behälters zu über 50% und insbesondere zu über 70% mit Wasser gefüllt ist. Durch einen derartigen, ähnlich wie ein Eisberg schwimmenden Schwimmbehälter ist sicher gestellt, dass die sich in dem Innenraum des Schwimmbehälter aufhaltenden Fische ausreichend Wasser zur Verfügung haben.

Erfindungsgemäß ist es vorgesehen, die Pumpeinrichtung mit einer mechanischen Pumpe, einer ersten Leitung zur Verbindung der Pumpe mit dem Schacht und einer zweiten Leitung zur Verbindung der Pumpe mit der Umgebung auszustatten, wobei die erste Leitung in einem Bodenbereich des Schachts in den Schacht mündet und wobei die zweite Leitung außerhalb von Einschwimmzonen bzw. Ausschwimmzonen in die Umgebung und insbesondere in das Unterwasser oder in das Oberwasser mündet. Hierdurch wird sichergestellt, dass die Pumpeinrichtung die Strömungsverhältnisse in den Einschwimmzonen bzw. Ausschwimmzonen nicht beeinflusst.

Weiterhin ist die Pumpe zur Bildung der Wasserabflusseinrichtung bevorzugt als Saugpumpe ausgebildet und/oder ist die Pumpe zur Bildung der Wasserzuflusseinrichtung als Druckpumpe ausgebildet. Hierdurch ist bei einer Ausbildung als Saug- und Druckpumpe eine Pumpe ausreichend, um die Funktionen des Niederfahrens trotz erhöhtem Wasserstand des Unterwassers und des Freispülens des Ringspalts auszuführen.

Weiterhin ist es bevorzugt vorgesehen, den Schacht mit einer unter einem Niveau des Oberwassers liegenden oberen Öffnung mit einem oberen Schleusenausgang auszustatten. Hierdurch können Fische in der oberen Stellung des Behälters ohne weitere Maßnahmen einfach ein- und ausschwimmen.

Es ist bevorzugt auch vorgesehen, den Fischlift mit einem oberen Rückhaltemittel auszustatten, wobei der Behälter in der oberen Stellung derart an dem oberen Rückhaltemittel anliegt, dass dieser an einer weiteren Bewegung nach oben gehindert ist, so dass - wie oben beschrieben - zwischen dem Behälter und einer Innenwand des Schachts ein Ringspalt ausgebildet ist, durch welchen Wasser aus dem eingeschlossenen Wasservolumen an dem Behälter vorbei nach oben austritt, wenn die Pumpeinrichtung unter dem Behälter Wasser in einen Innenraum des Schachts drückt. Durch das obere Rückhaltemittel ist sicher gestellt, dass der Behälter beim Freispülen nicht nach oben aus dem Schacht herausgedrückt wird.

Weiterhin ist es bevorzugt vorgesehen, den Fischlift mit einem Anschlagmittel auszustatten, wobei ein Sperrmittel des Anschlagmittels zwischen einer Sperrstellung und einer Freigabestellung verfahrbar ist und wobei das Anschlagmittel den Behälter in seiner unteren Stellung blockiert, wenn das Sperrmittel in seiner Sperrstellung steht. Hierdurch kann der Behälter bei erhöhtem Wasserstand des Unterwassers in seiner unteren Stellung gehalten werden, ohne dass hierzu die Pumpeinrichtung betrieben werden muss. Weiterhin ermöglicht eine derartige Festlegung des Behälters in seiner unteren Stellung auch in der unteren Stellung einen Spülvorgang, welcher sowohl als Druckspülung oder als Saugspülung oder als alternierende Druck- und Saugspülung durchgeführt werden kann.

Es ist bevorzugt auch vorgesehen, das Sperrmittel des Anschlagmittels durch einen oder mehrere Schieber und/oder Sperrklinken zu bilden. Insbesondere ist es vorgesehen, gleichmäßig auf einen Umfang des Behälters verteilt drei Schieber und/oder Sperrklinken vorzusehen, um eine Schrägstellung des gegen das Sperrmittel anschwimmenden Behälters zu vermeiden. Hinsichtlich einer Betätigung des Sperrmittels des Anschlagmittels ist es vorgesehen, diese elektrisch oder hydraulisch vorzunehmen, wobei die Freigabestellung vorzugsweise durch eine Federkraft herbeigeführt wird und die Sperrstellung gegen diese Federkraft elektromagnetisch oder hydraulisch herbeigeführt wird, so dass der Behälter bei einer Funktionsstörung von dem Sperrmittel freigegeben wird.

Weiterhin ist es bevorzugt vorgesehen, den Behälter mit zwei seitlichen Öffnungen und einer oberen Öffnung auszubilden, wobei die erste seitliche Öffnung auf die obere Öffnung des Schachts ausgerichtete ist und wobei die zweite seitliche Öffnung auf die untere Öffnung des Schachts ausgerichtet ist. Hierdurch ist ausschließlich eine vertikale Verfahrbewegung erforderlich, um sowohl in der unteren Stellung als auch in der oberen Stellung einen Zugang zum Unterwasser bzw. Oberwasser herzustellen.
Um mit dem Behälter die unter Öffnung des Schachts und die obere Öffnung des Schachts präzise anfahren zu können, ist der Behälter in dem Schacht bevorzugt durch Führungsmittel verdrehsicher geführt. Hierbei sind die Führungsmittel insbesondere durch eine Schiene oder durch zwei Schienen oder durch drei Schienen gebildet.

Weiterhin ist es bevorzugt vorgesehen, den Schacht zwischen der in das Unterwasser führenden unteren Öffnung und der in das Oberwasser führenden oberen Öffnung mit wenigstens einer weiteren verschließbare Öffnung auszustatten, welche in das Unterwasser führt, und/oder oberhalb der in das Oberwasser führenden oberen Öffnung mit wenigsten einer weiteren verschließbare Öffnung auszustatten, welche in das Oberwasser führt. Durch die Realisierung der ersten Ausführungsvariante ist es möglich, im Unterwasser in verschiedenen Wassertiefen Einstiege in den Fischlift bzw. Ausstiege aus dem Fischlift zu realisieren, so dass die Fische entsprechend der von ihnen bevorzugten Wassertiefe in den Behälter des Fischlifts einschwimmen bzw. aus dem Behälter ausschwimmen können. Durch die Realisierung der zweiten Ausführungsvariante ist es möglich, im Oberwasser in verschiedenen Wassertiefen Einstiege in den Fischlift bzw. Ausstiege aus dem Fischlift zu realisieren, so dass die Fische entsprechend der von ihnen bevorzugten Wassertiefe in den Behälter des Fischlifts einschwimmen bzw. aus dem Behälter ausschwimmen können. Die Ausführungsvarianten bringen sowohl in Einzelausführung als auch in kumulativer Ausführung den Vorteil mit sich, dass die Attraktivität des Fischlifts erhöht wird, da die Fische in der jeweils bevorzugten Wassertiefe ein- und ausschwimmen können.

Ergänzend ist es bevorzugt auch vorgesehen, den Behälter insbesondere oberhalb seiner gegenüber liegenden seitlichen Öffnungen mit wenigstens einer weiteren Öffnung auszustatten, wobei diese auf eine der weiteren Öffnungen des Schachts insbesondere derart ausgerichtet ist, dass diese der weiteren Öffnung in der oberen Stellung des Behälters gegenüber liegt und das Oberwasser über diese zugänglich ist, und/oder welche auf eine der weiteren Öffnungen des Schachts insbesondere derart ausgerichtet ist, dass diese der weiteren Öffnung in der unteren Stellung des Behälters gegenüber liegt und das Unterwasser über diese zugänglich ist. Hierdurch ist es möglich, die Fische durch zwei übereinander liegende Öffnungen des Schacht bzw. Öffnungen des Behälters ein- und ausschwimmen zu lassen und so Zeit zu sparen, da einzelne Wassertiefen nicht nacheinander angefahren werden müssen.

Es ist bevorzugt auch vorgesehen, dass eine Höhe (H20) der in das Unterwasser führenden Öffnung des Behälters das 1,5-fache und insbesondere wenigstens das 2-fache einer Höhe (H19) der in das Oberwasser führenden Öffnung des Behälters beträgt und dass eine Höhe (H10) der in das Unterwasser führenden Öffnung des Schachts das 1,5-fache und insbesondere wenigstens das 2-fache einer Höhe (H8) der in das Oberwasser führenden Öffnung des Schachts beträgt. Durch dem Unterwasser zugeordnete, erhöhte Öffnungen in Schacht und Behälter ist es möglich, den Fischen im Unterwasser mit minimalem technischem Aufwand ein Einschwimmen und Ausschwimmen in unterschiedlichen Wassertiefen zu ermöglichen.

Weiterhin sieht die Erfindung ein Verfahren zum Betrieb bzw. Reinigungsbetrieb eines Fischlifts vor, wobei der Fischlift entsprechend wenigstens einem der Vorrichtungsansprüche ausgebildet ist, wobei nach dem Verfahren zunächst ein Schleusenausgang und ein Schleuseneingang des Fischlifts geschlossen werden, dann der Schwimmbehälter durch Zufuhr von Wasser in dem Schacht bis in eine obere Stellung gegen ein die Aufwärtsbewegung stoppendes Rückhaltemittel angehoben wird und schließlich durch eine Pumpeinrichtung weiter Wasser in den Innenraum des Schachts unter den Behälter gedrückt wird, so dass Wasser durch einen zwischen dem Behälter und dem Schacht angeordneten Ringspalt an dem Schwimmbehälter vorbei derart nach oben aus dem Schacht gedrückt wird, dass Verschmutzungen ausgespült werden. Hierdurch ist es mit minimalem Aufwand möglich, dauerhaft eine Leichtgängigkeit des als Kolben in dem Schacht arbeitenden Behälters zu gewährleisten.

Schließlich sieht die Erfindung auch ein Verfahren zum Betrieb eines Fischlifts bei Hochwasser vor, wobei der Fischlift insbesondere entsprechend wenigstens einem der vorhergehenden Vorrichtungsansprüche ausgebildet ist, wobei zum Absenken des Schwimmbehälters aus seiner oberen Stellung ein Schleuseneingang des Fischlifts geschlossen wird und ein Ablass- und Spülkanal geöffnet wird, wobei der Schwimmbehälter insbesondere anschließend sowohl durch Abfuhr von Wasser in das Unterwasser über den Ablass- und Spülkanal als auch durch Abfuhr von Wasser, welches durch eine Pumpeinrichtung aus dem Innenraum des Schachts unter dem Schwimmbehälters abgepumpt wird, in dem Schacht bis in eine untere Stellung abgesenkt wird, wobei dann die Pumpeinrichtung nachdem der Schwimmbehälter die untere Stellung erreicht hat wenigstens in dem Maße aktiv bleibt, dass der Schwimmbehälters in seiner unteren Stellung solange gehalten wird bis wieder ein Anheben des Behälters vorgesehen ist oder bis das Unterwasser unter ein Hochwasserniveau abgesunken ist. Hierdurch kann der Fischlift auch bei Hochwasser betrieben werden, so dass sich dessen Verfügbarkeit erhöht und der Fischlift auch bei extremen Naturbedingungen noch Fische transportieren kann.

Der Begriff Fische umfasst im Sinne der Erfindung auch andere Lebewesen, in deren Natur es liegt stromaufwärts oder stromabwärts zu wandern.

Im Sinne der Erfindung wird unter einem Ventil ein Absperrmittel verstanden, welches geeignet ist einen Wasserstrom zu regeln.

Weitere Einzelheiten der Erfindung werden in der Zeichnung anhand von schematisch dargestellten Ausführungsbeispielen beschreiben.

Hierbei zeigt:
- Figur 1a bis 1e:: eine schematische Ansicht einer ersten Ausführungsvariante eines Fischlifts in verschiedenen Stellungen bei Unterwasser auf Normal-Niveau bzw. durchschnittlichem Niveau;
- Figur 2a bis 2f:: eine schematische Ansicht des in den Figuren 1a bis 1e gezeigten Fischlifts in verschiedenen Stellungen bei Unterwasser auf Über-Normal-Niveau;
- Figur 3:: eine schematische Draufsicht auf den Schacht und den Behälter des in den vorhergehenden Figuren gezeigten Fischlifts;
- Figur 4:: eine schematische Ansicht zweiten Ausführungsvariante eines Fischlifts;
- Figur 5a, 5b:: zwei schematische Ansichten einer dritten Ausführungsvariante eines Fischlifts und
- Figur 6a, 6b:: zweie schematische Ansichten einer vierten Ausführungsvariante eines Fischlifts.

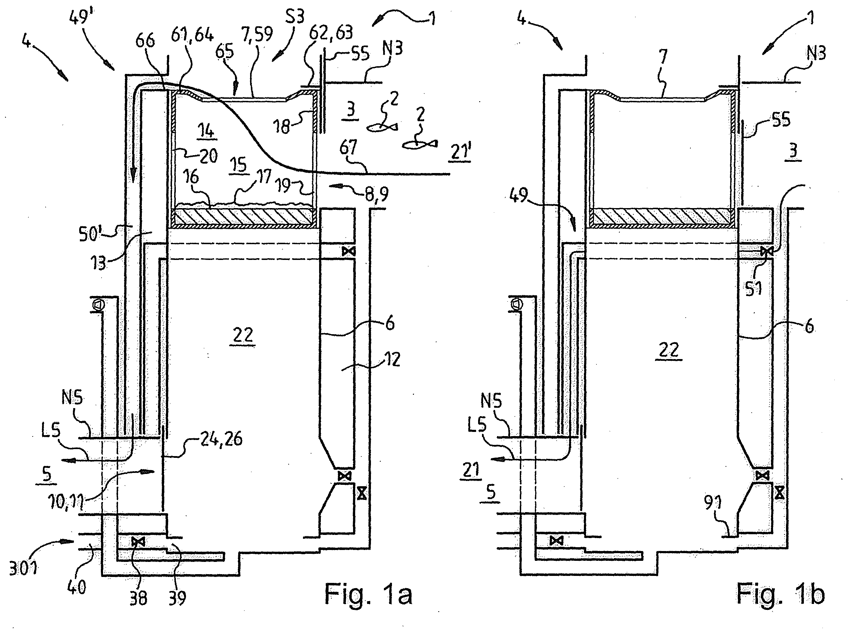

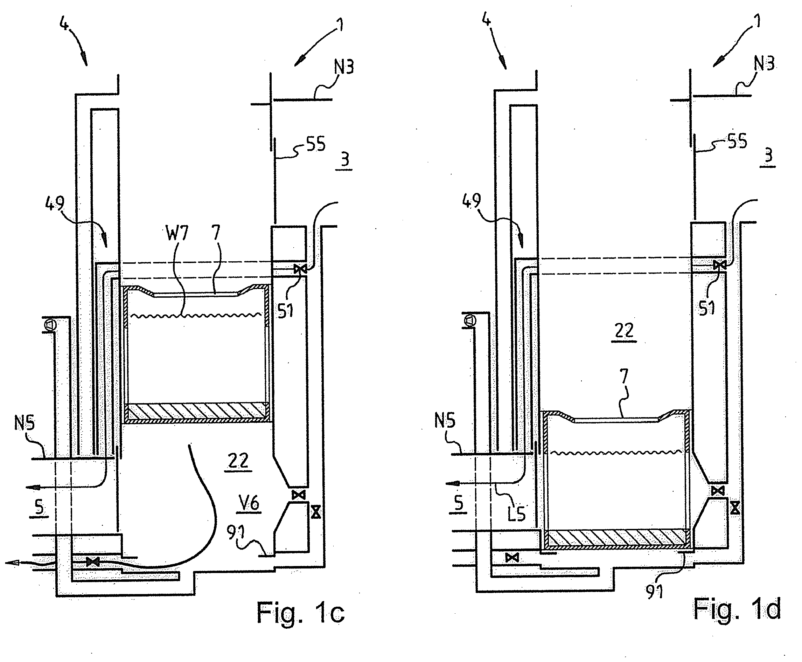

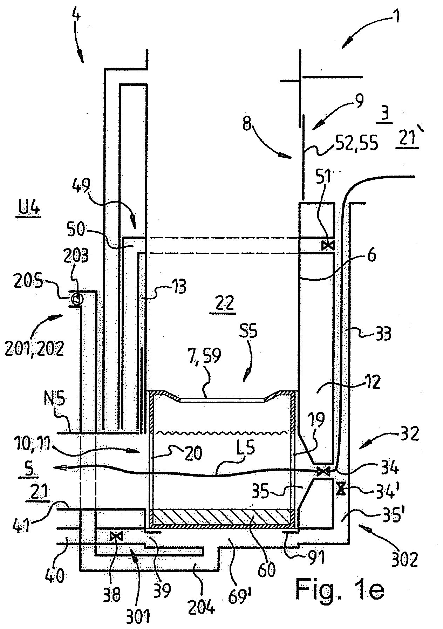

In den Figuren 1 bis 6b sind vier Ausführungsvarianten von Fischliften dargestellt. Hierbei werden für vergleichbare Bauteile die gleichen Bezugszeichen verwendet.

Die Figuren 1a bis 1e zeigen einen Fischlift 1 bei auf durchschnittlichem Niveau N5 stehendem Unterwasser 5 in unterschiedlichen Stellungen, wobei der Fischlift 1 bzw. eine Staustufe 4, in welche der Fischlift 1 integriert ist, in schematischen, geschnittenen Seitenansichten dargestellt ist. Anhand der Figuren 1a und 1e wird der Fischlift 1 zunächst in seiner grundsätzlichen Funktion beschrieben.

Der Fischlift 1 ist zum Transport von Fischen 2 zwischen einem Oberwasser 3 der Staustufe 4 und dem Unterwasser 5 der Staustufe 4 vorgesehen. Der Fischlift 1 umfasst einen Schacht 6 und einen Behälter 7. Hierbei umfasst der Schacht 6 eine unter einem Niveau N3 des Oberwassers 3 liegende obere Öffnung 8 mit einem oberen Schleusenausgang 9. Weiterhin umfasst der Schacht 6 eine unter dem Niveau N5 des Unterwassers 5 liegende untere Öffnung 10 mit einem unteren Schleuseneingang 11. Der Behälter 7 ist zwischen einer in der Figur 1a gezeigten oberen Stellung S3 und einer in der Figur 1e gezeigten unteren Stellung S5 verfahrbar. In dem Schacht 6 ist der Behälter 7 an zwei sich gegenüber liegenden Schienen 12, 13 geführt. Der Behälter 7, welcher in der Figur 1a in seiner oberen Stellung S3 gezeigt ist, ist derart geformt, dass dieser die beiden Schienen 12 ,13 umgreift. Der Behälter 7 umfasst einen Transportraum 14. Der Transportraum 14 bildet ein Becken 15. Das Becken 15 weist einen Beckenboden 16 auf, auf welchem Sohlsubstrat 17 angeordnet ist. Hierdurch stellt das Becken 15 für die Fische 2 und andere Lebewesen eine weitgehend natürliche Umgebung dar. In seiner Wandung 18 weist der Behälter 7 eine erste seitliche Öffnung 19 und eine zweite seitliche Öffnung 20 auf, welche in den Transportraum 14 führen. Wie aus der Figur 1e ersichtlich ist, liegt die zweite seitliche Öffnung 20 in der Stellung S5 unter dem Niveau N5 des Unterwassers 5 und führt in das Unterwasser 5 bzw. eine Einschwimmzone 21. Die zweite seitliche Öffnung 20 des Behälters 7 liegt in dessen unterer Stellung S5 dem Schleuseneingang 11 und der unteren Öffnung 10 des Schachts 6 derart gegenüber, dass bei geöffnetem Schleuseneingang 11 eine gegenüber dem den Behälter 7 umgebenden Innenraum 22 des Schachts 6 abgeschirmte Verbindung zum Unterwasser 5 besteht. Der Schleuseneingang 11 ist in der zweiten Schiene 13 ausgebildet, wobei diese zweite Schiene 13 eine auf die Öffnung 20 des Behälters 7 ausgerichtete untere Schienenöffnung aufweist. Hierbei umfasst der Schleuseneingang 11 die Öffnung 10, welche als Rohrabschnitts ausgeführt ist, ein Sperrglied 24 und ein nicht dargestelltes Betätigungsmittel für das Sperrglied 24. Das Sperrglied 24 ist als Schieber 26 ausgebildet und das nicht dargestellte Betätigungsmittel umfasst Aktuatoren und ein Gestänge. In der Figur 1e steht der Schieber 26 in einer hochgezogenen Stellung, so dass für die Fische 2 der Weg zwischen dem Unterwasser 5 und dem Transportraum 14 des Behälters 7 freigegeben ist. Das Sperrglied 24 und das nicht dargestellte Betätigungsmittel des Schleuseneingangs 11 sind in einem nicht dargestellten Hohlraum der zweiten Schiene 13 angeordnet und liegen somit geschützt in dem Schacht 6. In dem Transportraum 14 des Behälters 7 und in der Einschwimmzone 21 des Unterwassers 5 wird bei in der unteren Stellung S5 stehendem Behälter 7 und offenem Schleuseneingang 11 eine Leitströmung L5 über eine erste Leitwasserversorgung 32 hergestellt. Die erste Leitwasserversorgung 32 umfasst einen Versorgungskanal 33, ein Versorgungskanalventil 34 und eine Leitwasserdüse 35. Der Versorgungskanal 33 wird aus dem Oberwasser 3 gespeist, wobei die durch den Versorgungskanal 33 zuströmende Wassermenge durch das Versorgungskanalventil 34 geregelt wird. Die Leitwasserdüse 35 liegt der ersten seitlichen Öffnung 19 des Behälters 7 gegenüber, wenn dieser in seiner unteren Stellung S5 steht. Durch die Leitwasserdüse 35 strömt aus dem Oberwasser 3 Wasser als Leitströmung L5 in den Transportraum 14 des Behälters 7 und durch dessen zweite Öffnung 20 und den geöffneten Schleuseneingang 11 weiter in das Unterwasser 5 bzw. die Einschwimmzone 21.

Der Fischlift 1 umfasst weiterhin noch eine Ablasseinrichtung 301. Diese umfasst eine Ablassschleuse 38, durch welche eine in dem Schacht 6 ausgebildete Ablassöffnung 39 verschließbar ist. Die Ablassöffnung 39 ist unterhalb der unteren Öffnung 10 angeordnet und führt in einen Ablass- und Spülkanal 40, welcher unter einem Boden 41 der Einschwimmzone 21, vorbei an der Einschwimmzone 21 in das Unterwasser 5 führt. Solange der Behälter 7 in der unteren Stellung S5 steht, ist ein Öffnen der Ablassschleuse 38 allenfalls dann vorgesehen, wenn der Versorgungskanal 33 durchgespült werden muss. In einem derartigen Fall wird dann ein Ventil 34' geöffnet und Oberwasser aus dem Versorgungskanal 33 über eine Umleitung 35' unter den Behälter 7 geleitet. Hierdurch ist eine Spüleinrichtung 302 gebildet, durch welche an der Leitwasserdüse 35 vorbei Oberwasser unter dem Behälter 7 abströmen kann, ohne dass die im Behälter 7 und in der Einschwimmzone 21 ausgebildete Leitströmung L5 dadurch beeinträchtigt wird.

Der Fischlift 1 umfasst weiterhin eine zweite Leitwasserversorgung 49. Diese umfasst einen Versorgungskanal 50, welcher aus dem Oberwasser 3 gespeist wird, und ein Versorgungskanalventil 51. Der Versorgungskanal 50 der zweiten Leitwasserversorgung 49 mündet vor dem unteren Schleuseneingang 11 in die Einschwimmzone 21 des Unterwassers 5. In der in den Figuren 1e gezeigten unteren Stellung S5 des Behälters 7 ist das Versorgungskanalventil 51 geschlossen, so dass durch die zweite Leitwasserversorgung 49 kein Oberwasser 3 in das Unterwasser 5 geleitet wird. Die zweite Leitwasserversorgung 49 wird aktiviert, wenn der Schleuseneingang 11 verschlossen ist, um die Lockströmung im Unterwasser 5 aufrecht zu erhalten. Wie aus den Figur 1d und 1e weiter hervorgeht ist der Schleusenausgang 9 verschlossen, wenn der Behälter 7 in der unteren Stellung S5 steht oder in die untere Stellung fährt (siehe Figur 1c). Der Schleusenausgang 9 umfasst ein Sperrglied 52 und nicht dargestellte Betätigungsmittel, wobei seine Öffnung 8 durch einen Rohrabschnitt gebildet ist, welcher das Oberwasser 3 durch eine auf die obere Öffnung 8 des Schachts 6 und auf die Öffnung 19 des in der oberen Stellung S3 stehenden Behälters 7 ausgerichtete obere Schienenöffnung mit dem Innenraum 22 des Schachts 6 verbindet. Das Sperrglied 52 ist als Schieber 55 ausgebildet und die nicht dargestellten Betätigungsmittel sind durch nicht dargestellten Aktuatoren und ein nicht dargestelltes Gestänge gebildet. Durch den geschlossenen Schleusenausgang 9 wird das Einströmen von Oberwasser 3 in den Innenraum 22 des Schachts 6 verhindert. Der Behälter 7 ist als Schwimmbehälter 59 ausgebildet und umfasst einen Schwimmkörper 60. Hierdurch erhält der Behälter 7 bei in dem Innenraum 22 des Schachts 6 steigendem Wasserstand derart starken Auftrieb, dass dieser an den Schienen 12, 13 geführt aus seiner unteren Stellung S5 aufschwimmt und mit steigendem Wasserstand im Schacht 6 aus der in der Figur 1e gezeigten unteren Stellung S5 in die in der Figur 1a gezeigte obere Stellung S3 bewegt wird. Hierbei wird ein steigender Wasserstand in dem Schacht 6 dadurch erzeugt, dass der untere Schleuseneingang 11 durch den Schieber 26 geschlossen wird und weiterhin über die erste Leitwasserversorgung 32 und/oder über die Spüleinrichtung 302 Oberwasser 3 zugeleitet wird, wobei die Ablasseinrichtung 301 geschlossen bleibt. Eine Lockströmung L5 in der Einschwimmzone 21 wird dann über die zweite Leitwasserversorgung 49 aufrechterhalten. Sobald der Behälter 7 in der in der Figur 1a gezeigten oberen Stellung S3 steht, erfolgt eine Aufrechterhaltung der Lockströmung 21 im Unterwasser 5 zusätzlich oder alternativ auch über eine dritte Leitwasserversorgung 49', welche aus dem Behälter 7 überströmendes Oberwasser 3 durch einen Versorgungskanal 50' dem Unterwasser 5 im Bereich der Einschwimmzone 21 zuleitet.

Die obere Stellung S3 hat der Behälter 7 - wie in der Figur 1a gezeigt, wenn der schwimmende Behälter 7 mit seiner Oberseite 61 gegen einen den Schacht 6 nach oben begrenzendes Rückhaltemittel 62, welches als Anschlag 63 ausgebildet ist, anschwimmt und durch dieses an einer weiteren, nach oben gerichteten Hubbewegung gehindert wird. Sobald der Behälter 7 an dem Anschlag 63 anliegt kann der obere Schleusenausgang 9 geöffnet werden, so dass Oberwasser 3 in den Transportraum 14 des Behälters 7 einströmt. Eine Decke 64 des Behälters 7, welche die Oberseite 61 bildet, weist eine dritte Öffnung 65 auf, durch welche der Transportraum 14 des Behälters 7 von oben zugänglich ist. Da der Behälter 7 durch den Anschlag 63 mit seiner Oberseite 61 unterhalb des Niveaus N3 des Oberwassers 3 gehalten wird, quillt Oberwasser 3, welches durch den oberen Schleusenausgang 9 in den Transportraum 14 einströmt durch die Öffnung 65 nach oben aus dem Behälter 7 heraus. Das überquellende Oberwasser 3 fließt über eine Oberkante 66 des Schachts 6 und wird der dritten Leitwasserversorgung 49' zugeführt. Hierdurch stellt sich in dem Transportraum 14 nach dem Öffnen des Schleusenausgangs 9 eine von einer Ausschwimmzone 21' des Oberwassers 3 ausgehende obere Leitströmung 67 ein, durch welche die Fische 2 aus dem Transportraum 14 heraus in das Oberwasser 3 geleitet werden bzw. aus dem Oberwasser 3 in den Transportraum 14 geleitet werden. Solange der Behälter 7 in seiner oberen Stellung S3 steht, wird die Lockströmung L5 im Unterwasser 5 durch die zweite und/oder die dritte Leitwasserversorgung 49 bzw. 49' aufrechterhalten.

Bei Bedarf ist es vorgesehen, das Versorgungskanalventil 34 oder das Ventil 34' der Spüleinrichtung 302 leicht geöffnet zu halten, um Leckverluste am unteren Schleuseneingang 11 oder an der Ablassschleuse 38 zu kompensieren und den Behälter 7 konstant an dem Anschlag 63 zu halten.

Damit der in der Figur 1a in der oberen Stellung S3 stehende Behälter 7 seine Stellung S3 verlassen kann und Fische 2 in das Unterwasser 5 transportieren kann, wird in einem ersten Schritt ein Schieber 55 des oberen Schleuseneingangs 9 geschlossen. Hierdurch wird die obere Leitströmung 67 unterbrochen. Zum Ausgleich wird die zweite Leitwasserversorgung 49 durch Öffnen des Ventils 51 aktiviert, so dass in dem Unterwasser 5 eine Lockströmung erhalten bleibt, wie dies in der Figur 1b gezeigt ist. Zum Absenken des Behälters 7 aus der oberen Stellung S3 wird dann über die Ablassöffnung 39 durch den Ablass- und Spülkanal 40 aus dem Innenraum 22 des Schachts 8 Wasser in das Unterwasser 5 abgelassen, wobei dies durch Öffnen eines Ventils erfolgt, welches die Ablassschleuse 38 bildet. Hierdurch sinkt der Behälter 7 in dem Schacht 8 ab, wobei der Auftrieb des Behälters 7 derart bemessen ist, dass im Behälter 7 ein Wasserstand W7 erhalten bleibt, welcher den Fischen 2 eine ausreichende Wassertiefe gewährleistet. In der Figur 1c ist dargestellt, wie der Behälter 7 bereits auf eine Mittelstellung zwischen seiner oberen Stellung S3 und seiner unteren Stellung S5 abgesunken ist. Durch weiteres Ablassen von Wasser aus einem Innenraum 22 des Schachts 6 über den Ablass- und Spülkanal 40 auf das Niveau N5 des Unterwassers 5 sinkt der Behälter 7 in die in der Figur 1d gezeigte untere Stellung S5 ab. Während der gesamten Absinkphase bleibt die untere Öffnung 10 des Schachts 8 geschlossen, damit die im Unterwasser 5 hergestellte Leitströmung nicht durch aus dem Schacht 8 austretendes Wasser zu groß wird. Entsprechend mündet auch der Ablass- und Spülkanal 40 außerhalb der Einschwimmzone 21 in das Unterwasser 5. Um den Fischen 2, welche sich in dem Behälter 7 befinden, ein Ausschwimmen in das Unterwasser 5 zur ermöglichen, wird nunmehr die untere Öffnung 10 des Schachts 6 geöffnet. Weiterhin wird zur Herstellung einer bis in den Transportraum 14 des Behälters 7 reichenden Lockströmung das Ventil 51 der zweiten Leitwasserversorgung 49 geschlossen und das Ventil 34 der ersten Leitwasserversorgung 32 geöffnet, um Oberwasser 3 durch die Leitwasserdüse 35 in den Transportraum 14 des Behälters 7 zu leiten, aus welchem das eingeleitete Wasser dann in das Unterwasser 5 bzw. die Einschwimmzone 21 ausströmt und die untere Lockströmung L5 bildet.

Bei durchschnittlichem Wasserstand N5 des Unterwassers 5 bleibt eine Zusatzeinrichtung 201 des Fischlifts 1 außer Betrieb. Diese Zusatzeinrichtung 201 ist als Pumpeinrichtung 202 ausgebildet, welche als Wasserabflusseinrichtung oder als Wasserabflusseinrichtung und als Wasserzuflusseinrichtung arbeitet, und umfasst eine mechanische Pumpe 203, eine erste Leitung 204 zur Verbindung der Pumpe 203 mit dem Schacht 6 und eine zweite Leitung 205 zur Verbindung der Pumpe 203 mit der Umgebung U4 der Staustufe 4 umfasst. Hierbei mündet die erste Leitung 204 in einem Bodenbereich 69' des Schachts 6 in den Schacht 6 und hierbei mündet die zweite Leitung 205 außerhalb der Einschwimmzone 21 bzw. Ausschwimmzone 21' in die Umgebung U4 und insbesondere in das Unterwasser 5 oder in das Oberwasser 3.

Bei durchschnittlichem Wasserstand N5 des Unterwassers 5 oder bei einem unter dem durchschnittlichen Wasserstand N5 liegenden Wasserstand des Unterwassers 5 sinkt der Behälter 7 beim Ablassen von in dem Innenraum 22 des Schachts 6 enthaltenen Wasser bis auf untere Anschlagmittel 91 ab, so dass dessen seitliche Öffnung 20 auf die untere Öffnung 10 des Schachts 6 ausgerichtet ist.

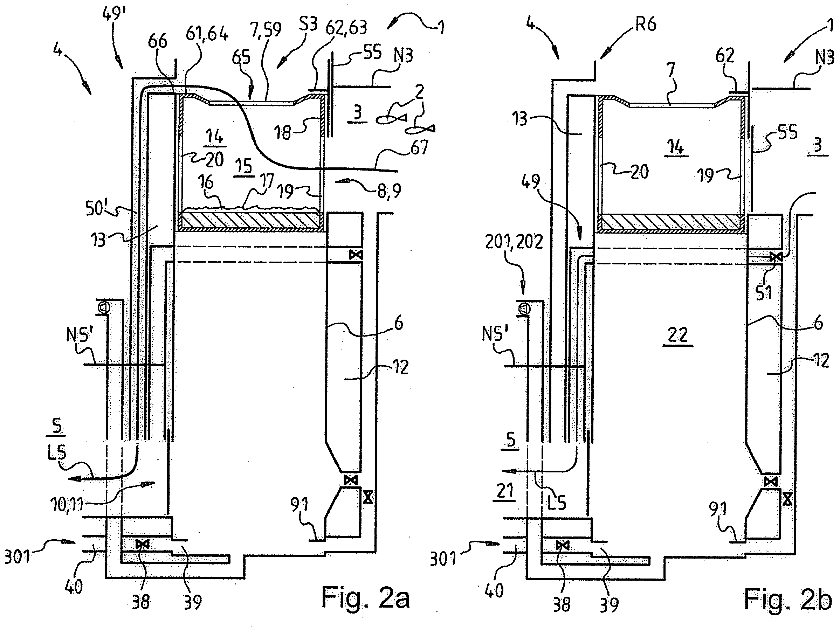

Bei erhöhtem Wasserstand N5' des Unterwassers, wie dieser in den Figuren 2a bis 2f gezeigt ist, ist es mittels der aus Ablassöffnung 39, Ablassschleuse 38 und Ablasskanal 40 bestehenden Ablasseinrichtung 301 nicht möglich, den Behälter 7 in dem Schacht 6 bis auf die unteren Anschlagmittel 91 abzusenken, da ein Schachtwasserstand N6 über die Ablasseinrichtung 301 und/oder über die untere Öffnung 10 des Schachts 6 nur bis auf das Niveau N5' absenkbar ist.

Die Figuren 2a bis 2e zeigen in Analogie zu den Figuren 1a bis 1f das Absenken des Behälters 7 bei auf überdurchschnittlichem Niveau N5' stehendem Unterwasser 5. Bezüglich der Figuren 2a und 2b wird auf die Beschreibung zu den Figuren 1a und 1b verwiesen.

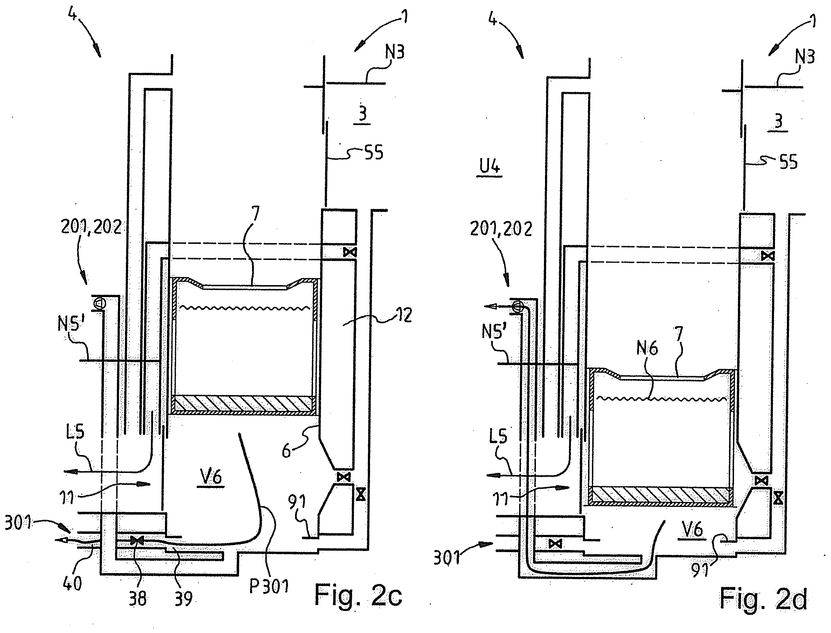

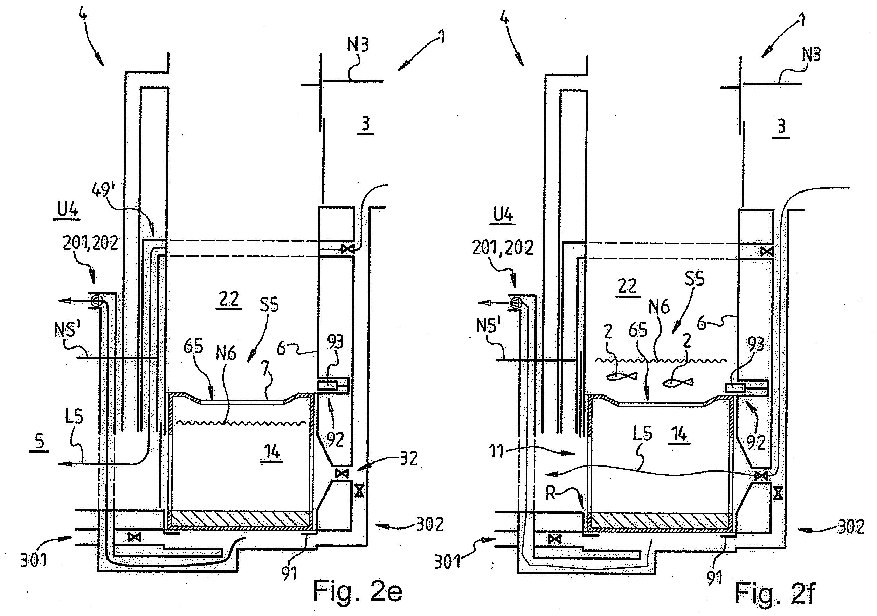

Bei auf überdurchschnittlichem Niveau N5' stehendem Unterwasser 5 ist es vorgesehen, die Ablassschleuse 38 nach einem Absenken des Schachtwasserstands N6 auf das Niveau N5' zu schließen (vergleiche Figuren 2c und 2d), um eine Rückströmung von Unterwasser 5 in den Schacht 6 zu verhindern, und dann die oben beschriebene Zusatzeinrichtung 201 als Pumpeinrichtung 202 in Betrieb zu nehmen und diese als Wasserabflusseinrichtung so lange arbeiten zu lassen bis der Schachtwasserstand N6 wenigstens auf das Niveau N5 abgesenkt ist und der Behälter 6 auf den unteren Anschlagmitteln 91 anliegt (siehe Figuren 2d und 2e). Die Pumpeinrichtung 202 bleibt anschließend (siehe Figur 2e) in dem Umfang in Betrieb in dem Wasser unter den Behälter 7 nachströmt, um diesen auf den Anschlagmitteln 91 in seiner unteren Stellung S5 zu halten.

Die Figuren 2c und 2d zeigen den Behälter 7 nun auf seinem Weg aus der oberen Stellung S3 in die untere Stellung S5. In der Figur 2c erfolgt ein Absenken des Behälters 7 noch mittels der Ablasseinrichtung 301, da ein Schachtwasserstand N6 noch über dem Niveau N5' des Unterwassers 5 liegt. Hierbei stellt sich nach und nach in einem Transportraum 14 des Behälters 7 der Schachtwasserstand N6 ein, da der Innenraum 22 des Schachts 6 und der Transportraum 14 des Behälters 7 über die Öffnungen 19, 20 des Behälters 7 und über einen zwischen dem Behälter 7 und dem Schacht 6 bestehenden Ringspalt R miteinander kommunizieren. Aus dem Innenraum 22 des Schachts 6 aus einem eingeschlossenen Wasservolumen V6 in das Unterwasser 5 über die Ablasseinrichtung 301 abströmendes Wasser ist durch einen Pfeil P301 symbolisiert.

Um den Schachtwasserstand N6 dann unter das Niveau N5' des Unterwassers 5 abzusenken, wie dies in der Figur 2d gezeigt ist, wird bei abgeriegelter Ablasseinrichtung 301 die Zusatzeinrichtung 201 als Pumpeinrichtung 202 in Betrieb genommen und unter dem Behälter 7 aus dem eingeschlossenen Wasservolumen V6 Wasser abgepumpt. Die Pumpeinrichtung 202 fördert das Wasser in die Umgebung U4. Das Absenken des Behälters 7 erfolgt bei geschlossenem unterem Schleuseneingang 11. In der Figur 2e ist der Behälter 7 dann in seiner unteren Stellung S5 angekommen und liegt auf den Anschlagmitteln 91 auf. Die Pumpeinrichtung 202 arbeitet nunmehr nur noch in dem Umfang, in dem Wasser unter den Behälter 7 nachströmt, um diesen in seiner unteren Stellung zu halten. Die Spüleinrichtung 302 ist in der Regel geschlossen, um eine zusätzliche Belastung der Pumpeinrichtung 202 zu vermeiden. In einem nächsten Schritt, welcher in der Figur 2f gezeigt ist, wird nun der untere Schleuseneingang 11 geöffnet und über die erste Leitwasserversorgung 32 eine in den Transportraum 14 des Behälters 7 reichende Lockströmung L5 hergestellt. Bis zum Öffnen des Schleuseneingangs 11 wird die Lockströmung in der Einschwimmzone 21 durch die dritte Leitwasserversorgung 49' sichergestellt (siehe Figur 2e). Durch das Öffnen des Schleuseneingangs 11 steigt durch die obere Öffnung 65 des Behälters 7 der Schachtwasserstand N6 in dem Innenraum 22 des Schachts 6 wieder auf das Niveau N5' des Unterwassers 5 an. Ein Aufschwimmen des Behälters 7 in dem Schacht 6 ist dadurch verhindert, dass Wasser über den Ringspalt R nur langsam und in geringen Mengen unter den Behälter 7 strömt und von der Pumpeinrichtung 202 in die Umgebung U4 abgefördert wird. Alternativ bzw. zusätzlich ist es vorgesehen, ein Aufschwimmen des Behälters 7 durch Sperrmittel 92 zu verhindern, welche nur in den Figuren 2e und 2f gezeigt sind und welche den Behälter 7 in seiner unteren Stellung S5 fixieren. Die Sperrmittel 92 umfassen wenigstens einen Schieber 93, welcher durch Wasserdruck gegen eine nicht dargestellte Feder in den Innenraum 22 des Schachts 6 ausfahrbar ist, wobei eine Versorgungsleitung und ein Ventil zur Steuerung der Wasserzufuhr nicht gezeigt sind. Sofern der Fischlift 1 über Sperrmittel 92 verfügt, ist ein Betrieb der Pumpeinrichtung 202 während der Behälter 7 in der Stellung S5 steht, nicht erforderlich. Um die Sperrmittel 92 ohne dass durch den Behälter 7 erzeugte Querkräfte überwunden werden müssen, wieder aus dem Innenraum 22 des Schachts 6 zurückziehen zu können, ist es vorgesehen, die Pumpeinrichtung 202 vor einem Einfahren des oder der Schieber 93 kurz in Betrieb zu nehmen, um den Behälter 7 gegen die unteren Anschlagmittel 91 zu ziehen bzw. saugen.

Sobald die für das Einschwimmen bzw. Ausschwimmen der Fische 2 vorgesehene Verweildauer des Behälters 7 in der unteren Stellung S5 erreicht ist, wird der untere Schleuseneingang 11 wieder geschlossen und die ggf. in Betrieb befindliche Pumpeinrichtung 202 abgestellt. Zum Anheben wird der Zustrom von Oberwasser 3 über die erste Leitwasserversorgung 32 aktiviert und/oder die Spüleinrichtung 302 geöffnet, wobei die Ablasseinrichtung 301 geschlossen ist. Beim Anheben des Behälters 7 schwimmt dieser in dem Maße nach oben, in dem Wasser über die erste Leitwasserversorgung 32 und/oder die Spüleinrichtung 302 unter den Behälter zugeführt wird und in dem Maße nach oben, in dem Wasser aus dem Innenraum 22 des Schachts 6 zwischen Schacht 6 und Behälter 7 unter dem Behälter 7 strömt und ein durch den Auftrieb des Behälters 7 bestimmtes Gleichgewicht erreicht ist. Sofern sich Fische 2 in dem Schacht 6 oberhalb einer Decke 64 des Behälters 7 befinden, werden diese beim Aufschwimmen des Behälters 7 durch dessen Öffnung 65 in dessen Transportraum 14 geführt, so dass diese keiner Gefahr ausgesetzt sind.

Sofern die Zusatzeinrichtung 201 als Pumpeinrichtung 202 in der Art einer Wasserabflusseinrichtung und einer Wasserzuflusseinrichtung derart betrieben wird, dass diese aus der Umgebung U4 Wasser in den Innenraum 22 des Behälters 7 drückt, ist es möglich, in der Stellung S5 (siehe Figur 2b), in welcher der Behälter 7 an dem Anschlag 63 anliegt und der Schieber 55 geschlossen ist, den Ringspalt R zwischen Behälter 7 und Schacht 6 zu spülen, da das von der Pumpeinrichtung 202 unter den Behälter 7 gepumpte Wasser nur an dem Behälter 7 vorbei nach oben austreten kann. Ein Einströmen von Wasser durch die seitlichen Öffnungen 19 und 20 des Behälters 7 in den Transportraum 14 des Behälters 7 ist dadurch zumindest weitgehend verhindert, dass die beiden Öffnungen 19, 20 durch die Schienen 12 bzw. 13 abgedichtet sind.

Weiterhin ist es für eine Wartung des Fischlifts 1 vorgesehen (siehe Figur 2b), die oberen Rückhaltemittel 62 zu entfernen und den Behälter 7 mit Hilfe der Pumpeinrichtung 202 durch Zufuhr von Wasser aus der Umgebung U4 in den Innenraum 22 des Schachts 6 über einen oberen Rand R6 des Schachts 6 anzuheben, so dass dieser durch nicht dargestellte Sicherungsmittel an dem Schacht 6 derart zuverlässig fixierbar ist, dass ein Betreten des Transportraums 14 des Behälters 7 zu Wartungszwecken nach den einschlägigen Vorschriften zulässig ist. Auf diese Weise kann die Pumpeinrichtung 202 einen Kran ersetzen und verkürzt insbesondere den für einen Service an dem Behälter erforderlichen Zeitaufwand, da das in Position Bringen eines Krans und das Fixieren und Lösen eines Traggeschirrs als Arbeitsschritte entfallen.

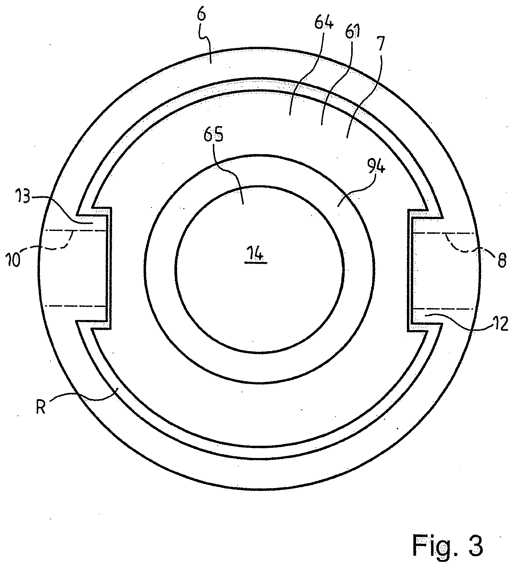

In der Figur 3 sind in schematischer Draufsicht der Schacht 6 und der Behälter 7 des in den vorhergehenden Figuren gezeigten Fischlifts 1 dargestellt. In der Draufsicht ist zunächst der Ringspalt R erkennbar, welcher zwischen dem Schacht 6 und dem Behälter 7 ausgebildet ist. Der Behälter 7 ist - wie oben bereits ausgeführt - an Schienen 12, 13 geführt, welche durch den Schacht 6 gebildet sind. Die Öffnung 65 des Behälters 7 geht über eine Schräge 94 in die Oberseite 61 des Behälters 7 über, welche eine Decke 64 bildet. Mit der Decke 64 schlägt der Behälter 7 in seiner oberen Stellung gegen das hier nicht dargestellte Rückhaltemittel an. Die Öffnung 65 öffnet sich zu einem Transportraum 14 des Behälters 7. Dieser ist abhängig von der Stellung des Behälters 7 in dem Schacht 6 auch durch dessen obere Öffnung 8 oder dessen untere Öffnung 10 zugängig.

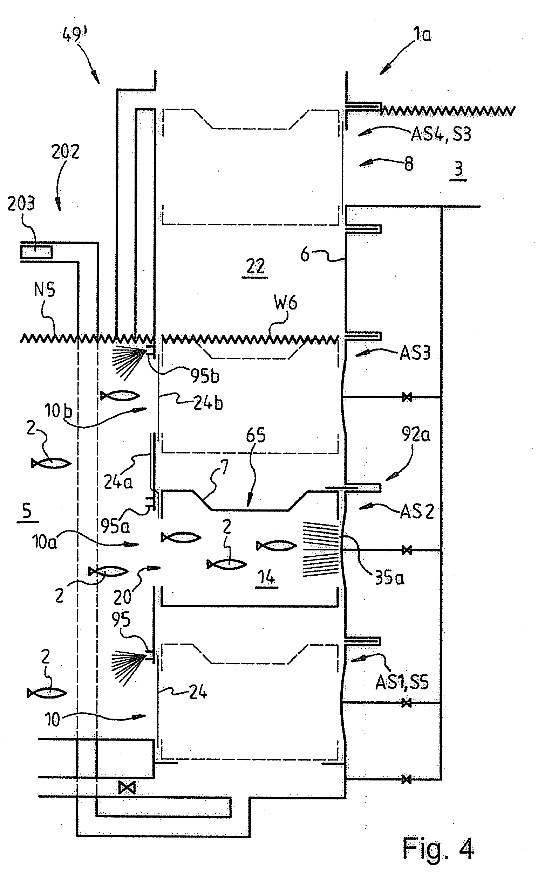

In der Figur 4 ist in schematischer Darstellung eine zweite Ausführungsvariante eines Fischlifts 1a in Seitenansicht gezeigt. Grundsätzlich wird hier zunächst auf die Beschreibung zu den vorhergehenden Figuren verwiesen, welche analog auch auf die in der Figur 4 gezeigte Ausführungsvariante zutrifft. Im Unterschied zu der in den vorhergehenden Figuren gezeigten ersten Ausführungsvariante eine Fischlifts umfasst ein Schacht 6 der in der Figur 4 gezeigten zweiten Ausführungsvariante zwischen einer unteren Öffnung 10 und einer oberen Öffnung 8 zwei weitere in ein Unterwasser 5 führende Öffnungen 10a und 10b. Sowohl die untere Öffnung 10 als auch die darüber liegenden Öffnungen 10a und 10b sind durch Sperrglieder 24 bzw. 24a bzw. 24b verschließbar. Hierbei ist in der Darstellung der Figur 4 nur das Sperrglied 24a der Öffnung 10a geöffnet, so dass Fische 2 - wie dargestellt - durch eine Öffnung 20 in einen Behälter 7 aus dem Unterwasser 5 einschwimmen können. Eine Lockströmung wird in dieser Stellung des Behälters 7 durch eine Leitwasserdüse 35a erzeugt. Wie zu den vorhergehenden Figuren beschrieben wird der Behälter 7, welcher als Schwimmbehälter ausgebildet ist, mittels einer Pumpeinrichtung 202, welche eine mechanische Pumpe 203 umfasst, in dem Schacht 6 in die dargestellte Aufzugsstellung AS2 gefahren und in dieser durch ein Spannmittel 92a an einem Aufschwimmen gehindert. Weitere Aufzugsstellungen AS1, AS3 und AS4 des Behälters 7 sind in der Figur 4 mit gestrichelten Linien angedeutet. Hierbei steht der Behälter 7 in der Aufzugstellung AS1 in einer unteren bzw. untersten Stellung S5 und hierbei steht der Behälter 7 in der Aufzugstellung AS4 in einer oberen bzw. obersten Stellung S3. Um auch bei geschlossenen Sperrgliedern 24, 24a und 24b in verschiedenen Wassertiefen eine Lockströmung aufrecht erhalten zu können, ist jeder Öffnung 10, 10a und 10b eine weitere Leitwasserdüse 95, 95a und 95b zugeordnet. In der Darstellung der Figur 4 sind die Leitwasserdüsen 95 und 95b aktiv, da die Sperrglieder 24 und 24b geschlossen sind. In dem Schacht 6 stellt sich sobald eines der Sperrglieder 24, 24a, 24b geöffnet ist eine Wasserstand W6 ein, welcher auf einem Niveau N5 des Unterwassers 5 liegt, da Unterwasser 5 über einen Transportraum 14 des Behälters 7 und dessen obere Öffnung 65 in einen Innenraum 22 des Schachts 6 strömt. Beim späteren Aufschwimmen des Behälters 7, welches ggf. durch die Pumpeinrichtung 202 unterstützt wird, indem diese Wasser unter den Behälter 7 drückt, strömt das oberhalb des Behälters 7 stehende Wasser abhängig von einer Hubgeschwindigkeit, mit welcher der Behälter 7 angehoben wird, um den Behälter 7 herum unter den Behälter 7 ab und/oder wird von dem Behälter 7 nach oben geschoben, um über eine dritte Leitwasserversorgung 49' in das Unterwasser 5 abzuströmen, wobei die Fische 2 durch die oberen Öffnung 65 in dem Transportraum 14 des Behälters 7 gesammelt werden, wenn der Behälter 7 in die Aufzugstellung AS4 verfahren wird.

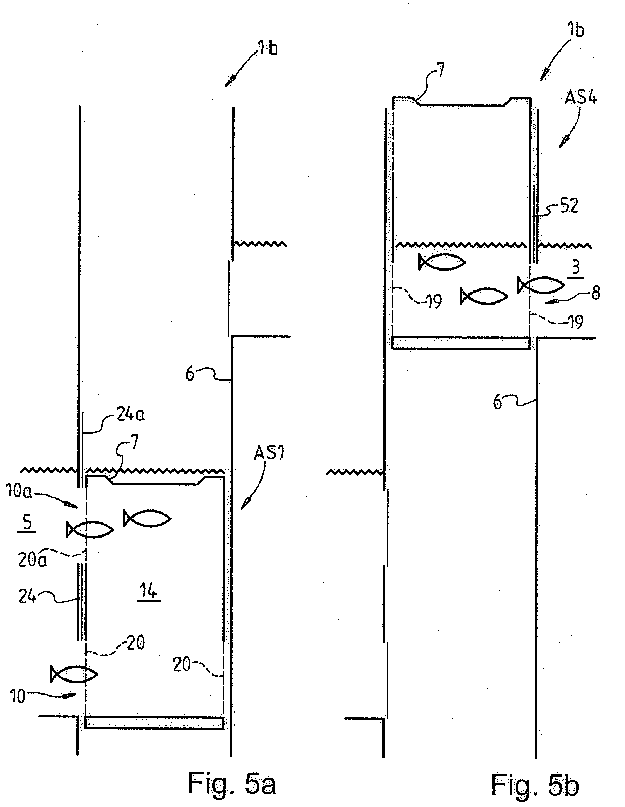

In den Figuren 5a und 5b ist nun in abstrakter Darstellung eine dritte Ausführungsvariante eines Fischlifts 1b in einer unteren Aufzugstellung AS1 und einer oberen Aufzugstellung AS4 gezeigt, wobei auf eine Darstellung von Leitwasserdüsen, Leitwasserversorgungen, eine Pumpeinrichtung und Anschlag- und Spannmittel verzichtet wurde. Ein Behälter 7, welcher in einem Schacht 6 verfahrbar ist, umfasst im Unterschied zu den in den vorhergehenden Figuren gezeigten Behältern nicht nur zwei gegenüberliegende seitliche Öffnungen 19, 20, welche auf eine erste seitliche Öffnung 8 des Schachts 6, die in ein Oberwasser 3 führt, und auf eine zweite seitliche Öffnung 10 des Schachts 6, die in ein Unterwasser 5 führt, ausgerichtet sind, sondern umfasst auch eine dritte seitliche Öffnung 20a, welche oberhalb der seitlichen Öffnung 20 in dem Behälter 7 angeordnet ist. Diese weitere seitliche Öffnung 20a ist in der Aufzugstellung AS1 auf eine weitere Öffnung 10a des Schachts 6 ausgerichtet, so dass Fische 2 in der Aufzugsstellung AS1 bei geöffneten Sperrgliedern 24 und 24a aus dem Unterwasser 5 in einen Transportraum 14 des Behälters 7 durch die Öffnungen 10, 20 und 10a, 20a ein- und ausschwimmen können. In der Figur 5b ist gezeigt, wie der Behälter 7 in der Aufzugstellung AS4 bei geöffnetem Sperrglied 52 steht und die Fische 2 über die Öffnungen 19, 8 in das Oberwasser 3 aus- und einschwimmen können. In der Aufzugsstellung AS4 sind die Öffnungen 20 und 20a des Behälters 7 durch den Schacht 6 verschlossen.

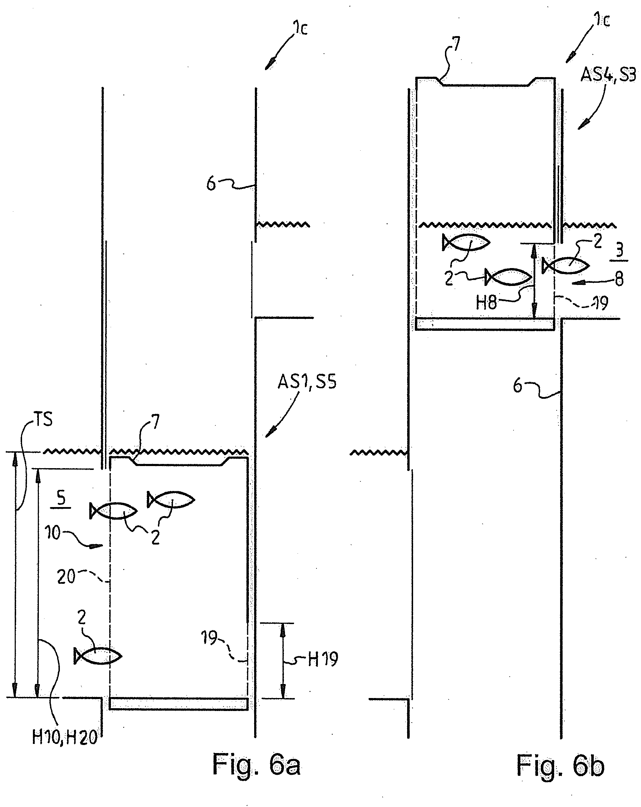

In den Figuren 6a und 6b ist nun in abstrakter Darstellung eine vierte Ausführungsvariante eines Fischlifts 1c in einer unteren Aufzugstellung AS1 und einer oberen Aufzugstellung AS4 gezeigt, wobei auf eine Darstellung von Leitwasserdüsen, Leitwasserversorgungen, eine Pumpeinrichtung und Anschlag- und Spannmittel verzichtet wurde. Ein Behälter 7, welcher in einem Schacht 6 verfahrbar ist, umfasst eine Öffnung 20, welche auf eine in das Unterwasser 5 führende Öffnung 10 des Schachts 6 angepasst ist und eine Öffnung 19, welche auf eine in das Oberwasser 3 führende Öffnung 8 des Schachts 6 angepasst ist. Hierbei weisen die zu dem Unterwasser 5 gerichteten Öffnungen 20 und 10 Höhen H20 und H10 auf, welche dreimal so hoch ausgeführt sind wie zu dem Oberwasser 3 gerichtete Öffnungen 19 und 8 mit Höhen H19 und H8. Eine derartige Dimensionierung der dem Unterwasser 5 zugewandten Öffnungen 20, 10 erlaubt eine Ein- und Ausschwimmen von Fischen 2 über eine gesamte Tiefe T5 des Unterwassers 5. In der Figur 6b ist der Behälter 7 in der Aufzugstellung AS4 gezeigt, in welcher seine Öffnung 10 durch den Schacht 6 verschlossen ist und in welcher die Fische 2 durch die Öffnungen 19, 8 bei geöffnetem Sperrglied 52 in das Oberwasser 3 ein- und ausschwimmen können.

### Bezugszeichenliste:

- 1, 1a, 1b, 1c: Fischlift
- 2: Fisch
- 3: Oberwasser
- 4: Staustufe
- 5: Unterwasser
- 6: Schacht
- 7: Behälter
- 8: obere Öffnung des Schachts 6
- 9: oberer Schleusenausgang
- 10, 10, 10b: untere Öffnung des Schachts 6
- 11: unterer Schleuseneingang
- 12: erste Schiene des Schachts 6
- 13: zweiten Schiene 13
- 14: Transportraum in 7
- 15: Becken in 7
- 16: Beckenboden von 15
- 17: Sohlsubstrat
- 18: Wandung des Behälters 7
- 19: erste seitliche Öffnung in 7
- 20, 20a: zweite seitliche Öffnung in 7
- 21: Einschwimmzone im Unterwasser 5
- 21': Ausschwimmzone im Oberwasser 3
- 22: Innenraum des Schachts 6
- 23: nicht belegt
- 24, 24a, 24b: Sperrglied von 11
- 25: nicht belegt
- 26: Schieber von 11
- 27 - 31: nicht belegt
- 32: erste Leitwasserversorgung
- 33: Versorgungskanal von 32
- 34: Versorgungskanalventil von 32
- 34': Ventil von 302
- 35, 35a: Leitwasserdüse von 302
- 35': Umleitung von 302
- 36, 37: nicht belegt
- 38: Ablassschleuse
- 39: Ablassöffnung von 38
- 40: Ablass- und Spülkanal von 38
- 41: Boden der Einschwimmzone 21
- 42: Sperrglied von 38
- 43: Schieber von 38
- 44: Betätigungsmitteln von 38
- 45, 46, 47: nicht belegt
- 48: Rohrabschnitt von 38
- 49: zweite Leitwasserversorgung
- 49': dritte Leitwasserversorgung
- 50: Versorgungskanal von 49
- 50': Versorgungskanal von 49'
- 51: Versorgungskanalventil von 49
- 52: Sperrglied von 9
- 53: nicht belegt
- 54: Rohrabschnitt von 9
- 55: Schieber von 9
- 56, 57, 58: nicht belegt
- 59: Schwimmbehälter
- 60: Schwimmkörper von 59
- 61: Oberseite von 7
- 62: Rückhaltemittel an 6
- 63: Anschlag an 6
- 64: Decke von 7
- 65: Öffnung in 64
- 66: Oberkante von 6
- 67: obere Leitströmung in 3
- 68: Unterseite von 7
- 69: nicht belegt
- 69': Bodenbereich
- 70 - 90: nicht belegt
- 91: Anschlagmittel
- 92, 92a: Spannmittel
- 93: Schieber von 92
- 94: Schräge von 7
- 95, 95a, 95b: weitere Leitwasserdüse

- 201: Zusatzeinrichtung
- 202: Pumpeinrichtung
- 203: mechanische Pumpe
- 204: erste Leitung von 201 bzw. 202
- 205: zweite Leitung von 201 bzw. 202

- 301: Ablasseinrichtung umfasst 38 - 40
- 302: Spüleinrichtung umfasst 34' und 35'

- AS1 - AS4: Aufzugstellung
- H8, H10, H19, H20: Höhe von 8, 10, 19 bzw. 20
- L5: Lockströmung im Unterwasser
- N3: Niveau N3 des Oberwassers 3
- N5: Niveau N5 des Unterwassers 5
- R: Ringspalt zwischen 6 und 7
- R6: oberer Rand von 6
- S3: obere Stellung des Behälters 7
- S5: untere Stellung des Behälters 7
- T5: Tiefe von 5
- U4: Umgebung
- W6: Wasserstand in 6
- W7: Wasserstand in 7
- V6: eingeschlossenen Wasservolumen

## Patentansprüche

1. Fischlift (1, 1a, b, 1c) zum Transport von Fischen (2) zwischen einem Oberwasser (3) einer Staustufe (4) und einem Unterwasser (5) der Staustufe (4) umfassend
- einen Schacht (6) und einen Behälter (7),
- wobei der Schacht (6) eine unter einem Niveau (N5; N5') des Unterwassers (5) liegende untere Öffnung (10) mit einem unteren Schleuseneingang (11) umfasst,
- wobei der Behälter (7) zwischen einer oberen Stellung (S3) und einer unteren Stellung (S5) verfahrbar ist,
- wobei der Behälter (7) als Schwimmbehälter (59) ausgebildet ist,
- wobei der Schwimmbehälter (59) auf seinem Weg zwischen der oberen Stellung (S3) und der unteren Stellung (S5) in einem im Schacht (6) unter dem Behälter (7) eingeschlossenen Wasservolumen (V6) schwimmt,
- wobei der Behälter (7) durch Wasserabfluss aus dem im Schacht (6) eingeschlossenen Wasservolumen (V6) abgesenkt wird oder wobei der Behälter (7) durch Wasserzufluss zu dem in dem Schacht (6) eingeschlossenen Wasservolumen (V6) angehoben wird,
- wobei der Fischlift (1) eine Pumpeinrichtung (202) umfasst,
- wobei die Pumpeinrichtung (202) eine mechanische Pumpe (203), eine erste Leitung (204) zur Verbindung der Pumpe (203) mit dem Schacht (6) und eine zweite Leitung (205) zur Verbindung der Pumpe (203) mit einer Umgebung (U4) der Staustufe (4) umfasst,
**dadurch gekennzeichnet,**
- **dass** die Pumpeinrichtung (203) als Zusatzeinrichtung (201) ausgebildet ist, welche als Wasserabflusseinrichtung oder als Wasserabflusseinrichtung und Wasserzuflusseinrichtung ausgebildet ist, wobei die Wasserabflusseinrichtung bei durchschnittlichem Niveau (N5) des Unterwassers (5) außer Betrieb bleibt,
- **dass** die erste Leitung (204) in einem Bodenbereich 69') des Schachts (6) in den Schacht (6) mündet und
- **dass** die zweite Leitung (205) außerhalb der Einschwimmzone (21) bzw. Ausschwimmzone (21') in die Umgebung (U4) und insbesondere in das Unterwasser (5) oder in das Oberwasser (3) mündet.

2. Fischlift (1, 1a, b, 1c) nach Anspruch 1, **dadurch gekennzeichnet, dass** die Pumpeinrichtung (202) in ihrer Leistungsfähigkeit derart ausgelegt ist, dass von dieser aus dem im Schacht (6) eingeschlossenen Wasservolumen (V6) ein Volumenstrom abgeführt wird, welcher größer ist als ein Volumenstrom, welcher aus dem Oberwasser (3) dem eingeschlossenen Wasservolumen (V6) zuströmt und/oder dass die Pumpeinrichtung (202) in ihrer Leistungsfähigkeit derart ausgelegt ist, dass von dieser dem im Schacht (6) eingeschlossenen Wasservolumen (V6) ein Volumenstrom zugeführt wird, welcher größer ist als ein Volumenstrom, welcher aus dem eingeschlossenen Wasservolumen (V6) in das Unterwasser (5) abströmt.

3. Fischlift (1, 1a, b, 1c) nach wenigstens einem der vorhergehenden Ansprüche, **dadurch gekennzeichnet, dass** der Schwimmbehälter (59) einen Auftrieb aufweist, welcher derart bemessen ist, dass ein Transportraum (14) des Behälters (7) zu über 50% und insbesondere zu über 70% mit Wasser gefüllt ist.

4. Fischlift (1, 1a, b, 1c) nach einem der vorhergehenden Ansprüche, **dadurch gekennzeichnet, dass** die Pumpe (203) zur Bildung der Wasserabflusseinrichtung als Saugpumpe ausgebildet ist und/oder dass die Pumpe zur Bildung der Wasserzuflusseinrichtung als Druckpumpe ausgebildet ist.

5. Fischlift (1, 1a, b, 1c) nach einem der vorhergehenden Ansprüche, **dadurch gekennzeichnet, dass** der Schacht (6) eine unter einem Niveau (N3) des Oberwassers (3) liegende obere Öffnung (8) mit einem oberen Schleusenausgang (9) umfasst.

6. Fischlift (1, 1a, b, 1c) nach einem der vorhergehenden Ansprüche, **dadurch gekennzeichnet, dass** der Fischlift (1) ein oberes Rückhaltemittel (62) umfasst, wobei der Behälter (7) in der oberen Stellung (S3) derart an dem oberen Rückhaltemittel (62) anliegt, dass dieser an einer weiteren Bewegung nach oben gehindert ist, wobei zwischen dem Behälter (7) und einer Innenwand des Schachts (6) ein Ringspalt (R) ausgebildet ist, durch welchen aus dem eingeschlossenen Wasservolumen (V6) Wasser an dem Behälter (7) vorbei nach oben austritt, wenn die Pumpeinrichtung (202) Wasser unter dem Behälter (7) in einen Innenraum (22) des Schachts (6) drückt.

7. Fischlift (1, 1a, b, 1c) nach einem der vorhergehenden Ansprüche, **dadurch gekennzeichnet, dass** der Fischlift (1) ein Anschlagmittel (91) umfasst, wobei ein Sperrmittel (92) des Anschlagmittels (91) zwischen einer Sperrstellung und einer Freigabestellung verfahrbar ist, wobei das Anschlagmittel (91) den Behälter (7) in seiner unteren Stellung (S5) blockiert, wenn dessen Sperrmittel (92) in seiner Sperrstellung steht, wobei das Anschlagmittel (91) als Sperrmittel (92) insbesondere einen oder mehrere Schieber (93) und/oder Sperrklinken umfasst und wobei das Sperrmittel (92) des Anschlagmittels (91) insbesondere elektrisch oder hydraulisch betätigbar ist.

8. Fischlift (1, 1a, b, 1c) nach einem der vorhergehenden Ansprüche, **dadurch gekennzeichnet, dass** der Behälter (7) zwei seitliche Öffnungen (19, 20) und eine obere Öffnung (65) umfasst, wobei die erste seitliche Öffnung (19) auf die obere Öffnung (8) des Schachts (6) ausgerichtete ist und wobei die zweite seitliche Öffnung (20) auf die untere Öffnung (10) des Schachts (6) ausgerichtet ist.

9. Fischlift (1, 1a, b, 1c) nach einem der vorhergehenden Ansprüche, **dadurch gekennzeichnet, dass** der Behälter (7) in dem Schacht (6) durch Führungsmittel, welche insbesondere als Schienen (12, 13) ausgebildet sind, verdrehsicher geführt ist.

10. Fischlift (1a, 1b) nach einem der vorhergehenden Ansprüche, **dadurch gekennzeichnet, dass** der Schacht (6) zwischen der in das Unterwasser (5) führenden unteren Öffnung (10) und der in das Oberwasser (3) führenden oberen Öffnung (8) wenigstens eine weitere verschließbare Öffnung (10a, 10b) umfasst, welche in das Unterwasser (5) führt, und/oder oberhalb der in das Oberwasser (3) führenden oberen Öffnung (8) wenigsten eine weitere verschließbare Öffnung umfasst, welche in das Oberwasser (3) führt.

11. Fischlift (1b) nach Anspruch 8, **dadurch gekennzeichnet, dass** der Behälter (7) insbesondere oberhalb seiner gegenüber liegenden seitlichen Öffnungen (19, 20) wenigstens eine weitere Öffnung (20a) umfasst, welche auf eine der weiteren Öffnungen (10a) des Schachts (6) insbesondere derart ausgerichtet ist, dass diese dieser in der oberen Stellung (S3, AS4) des Behälters (7) gegenüber liegt und das Oberwasser (3) über diese zugänglich ist, und/oder welche auf eine der weiteren Öffnungen des Schachts (6) insbesondere derart ausgerichtet ist, dass diese dieser in der unteren Stellung (S5, AS1) des Behälters (7) gegenüber liegt und das Unterwasser (5) über diese zugänglich ist.

12. Fischlift (1c) nach einem der vorhergehenden Ansprüche 1 bis 11, **dadurch gekennzeichnet, dass** die Öffnung (20) des Behälters (7) und die Öffnung (10) des Schachts (6), welche einander zugeordnet sind, Höhen (H20, H10) aufweisen und dass die Öffnung (19) des Behälters (7) und die Öffnung (8) des Schachts (6), welche einander zugeordnet sind, Höhen (H19, H8) aufweisen, wobei die Höhe (H20) das 1,5-fache und insbesondere wenigstens das 2-fache der Höhe (H19) beträgt und wobei die Höhe (H10) das 1,5-fache und insbesondere wenigstens das 2-fache der Höhe (H8) beträgt.

13. Verfahren zum Betrieb eines Fischlifts (1), **dadurch gekennzeichnet, dass** der Fischlift (1) entsprechend wenigstens einem der vorhergehenden Ansprüche ausgebildet ist, und dadurch,
- dass ein Schleusenausgang (9) und ein Schleuseneingang (11) des Fischlifts (1) geschlossen werden,
- dass der Schwimmbehälter (59) durch Zufuhr von Wasser in dem Schacht (6) bis in eine obere Stellung (S5) gegen ein die Aufwärtsbewegung stoppendes Rückhaltemittel (62) gedrückt wird und
- dass durch eine Pumpeinrichtung (202) weiter Wasser in einen Innenraum (22) des Schachts (6) unter den Behälter (7) gedrückt wird, so dass Wasser durch einen zwischen dem Behälter (7) und dem Schacht (6) angeordneten Ringspalt (R) an dem Schwimmbehälter (59) vorbei derart nach oben aus dem Schacht (6) gedrückt wird, dass Verschmutzungen ausgespült werden.

14. Verfahren zum Betrieb eines Fischlifts (1) bei Hochwasser, wobei der Fischlift (1) insbesondere entsprechend wenigstens einem der vorhergehenden Ansprüche 1 bis 12 ausgebildet ist, **dadurch gekennzeichnet,**
- **dass** zum Absenken des Schwimmbehälters (59) aus seiner oberen Stellung (S3) ein Schleuseneingang (11) des Fischlifts (1) geschlossen wird und ein Ablass- und Spülkanal (40) geöffnet wird,
- wobei der Schwimmbehälter (59) sowohl durch Abfuhr von Wasser in das Unterwasser (5) über den Ablass- und Spülkanal (40) als auch durch Wasser, welches durch eine Pumpeinrichtung (202) aus dem Innenraum (22) des Schachts (6) unter dem Schwimmbehälters (59) abgepumpt wird, in dem Schacht (6) bis in eine untere Stellung (S5) abgesenkt wird,
- wobei die Pumpeinrichtung (202) nachdem der Schwimmbehälter (59) die untere Stellung (S5) erreicht hat wenigstens in einem solchen Maße aktiv bleibt, dass der Schwimmbehälters (59) in seiner unteren Stellung (S5) solange gehalten wird bis wieder ein Anheben des Behälters (7) vorgesehen ist oder bis das Unterwasser (5) unter ein Hochwasserniveau abgesunken ist.

## Claims

1. Fish lift (1, 1 a, b, 1 c) for transporting fish (2) between an upstream side (3) of a barrage (4) and a downstream side (5) of the barrage (4), comprising
- a hoistway (6) and a container (7),
- wherein the hoistway (6) comprises a lower opening (10) which is below a level (N5, N5') of the downstream side (5) and has a lower sluice inlet (11),
- wherein the container (7) is displaceable between an upper position (S3) and a lower position (S5),
- wherein the container (7) is designed as a floating container (59),
- wherein the floating container (59) floats in a water volume (V6) enclosed in the hoistway (6) under the container (7) on its way between the upper position (S3) and the lower position (S5)
- wherein the container (7) is lowered by water flowing out of the water volume (V6) enclosed in the hoistway (6), or wherein the container (7) is lifted by water inflow into the water volume (V6) enclosed in the hoistway (6),
- wherein the fish lift (1) comprises a pump device (202)
- wherein the pump device (202) comprises a mechanical pump (203), a first line (204) to connect the pump (203) to the hoistway (6), and a second line (205) to connect the pump (203) to surroundings (U4) of the barrage (4),
**characterized in that**
- the pump device (203) is designed as an additional device (201), which is designed as a water discharge device, or as a water discharge device and water supply device, wherein the water discharge device remains inoperative at the average level (N5) of the downstream side (5),
- the first line (204) opens into the hoistway (6) in a bottom area (69') of the hoistway (6), and
- the second line (205) opens out into the surroundings (U4) and, in particular, into the downstream side (5) or into the upstream side (3) outside the area of the swimming-in zone (21) or swimming-out zone (21').

2. Fish lift (1, 1a, b, 1c) according to claim 1,
**characterized in that**
the pump device (202) is so designed in its capacity that it discharges a volume flow from the water volume (V6) enclosed in the hoistway (6) that is greater than the volume flow flowing from the upstream side (3) into the enclosed water volume (V6), and/or that the pump device (202) is so designed in its capacity that the water volume (V6) enclosed in the hoistway (6) is supplied with a volume flow that is greater than the volume flow flowing out of the enclosed water volume (V6) into the downstream side (5).

3. Fish lift (1, 1 a, b, 1c) according to one of the preceding claims,
**characterized in that**
the floating container (59) has a buoyancy which is so dimensioned that the transport space (14) of the container (7) is filled with water to more than 50% and, in particular, more than 70%.

4. Fish lift (1, 1a, b, 1c) according to one of the preceding claims,
**characterized in that**
the pump (203) is designed as a suction pump to form the water drainage device, and/or the pump is designed as a pressure pump to form the water feed device.

5. Fish lift (1, 1a, b, 1c) according to one of the preceding claims,
**characterized in that**
the hoistway (6) has an upper opening (8) with an upper sluice outlet (9) located below a level (N3) of the upstream side (3).

6. Fish lift (1, 1a, b, 1c) according to one of the preceding claims,
**characterized in that**
the fish lift (1) comprises an upper retaining means (62), wherein the container (7) so abuts the upper retaining means (62) in the upper position (S3) that further upward movement is prevented, wherein an annular gap (R) is formed between the container (7) and an inner wall of the hoistway (6), through which the enclosed water volume (V6) forces water upwards past the container (7) when the pump device (202) presses water under the container (7) into an inner space (22) of the hoistway (6).

7. Fish lift (1, 1a, b, 1c) according to one of the preceding claims,
**characterized in that**
the fish lift (1) comprises a stopping means (91), wherein a blocking means (92) of the stopping means (91) is movable between a blocking position and a release position, wherein the stopping means (91) blocks the container (7) in its lower position (S5), when the blocking means (92) is in its blocking position, wherein the stopping means (91) comprises in particular one or more slides (93) and/or retaining pawls as blocking means (92), and wherein the blocking means (92) of the stopping means (91) may be actuated, in particular, electrically or hydraulically.

8. Fish lift (1, 1 a, b, 1 c) according to one of the preceding claims,
**characterized in that**
the container (7) comprises two lateral openings (19, 20) and an upper opening (65), wherein the first lateral opening (19) is aligned with the upper opening (8), and wherein the second lateral opening (20) is aligned with the lower opening (10) of the hoistway (6).

9. Fish lift (1, 1 a, b, 1 c) according to one of the preceding claims,
**characterized in that**
the container (7) is guided in the hoistway (6) in a rotationally-fixed manner by means of guide means that are designed, in particular, as rails (12, 13).

10. Fish lift (1a, 1b) according to one of the preceding claims,
**characterized in that**
the hoistway (6) comprises between the lower opening (10) leading into the downstream side (5) and the upper opening (8) leading into the upstream side (3) at least one further closable opening (10a, 10b) which leads into the downstream side (5), and/or at least one further closable opening above the upper opening (8) leading into the upstream side (3).

11. Fish lift (1 b) according to claim 8,
**characterized in that**
the container (7), in particular above its opposing lateral openings (19, 20), comprises at least one further opening (20a) which is, in particular, so aligned with one of the further openings (10a) of the hoistway (6) that this lies opposite the upper position (S3, AS4) of the container (7) and the upstream side (3) is accessible via this, and/or that it is so aligned with one of the further openings of the hoistway (6) that the latter lies opposite the lower position (S5, AS1) of the container (7) and the downstream side (5) is accessible via the latter.

12. Fish lift (1c) according to one of the preceding claims,
**characterized in that**
the opening (20) of the container (7) and the opening (10) of the hoistway (6), which are associated with one another, comprise heights (H20, H10), while the opening (19) of the container (7) and the opening (8) of the hoistway (6), which are associated with one another, comprise heights (H19, H8), wherein the height (H20) is 1.5 times, and in particular at least 2 times, the height (H19), and wherein the height (H10) is 1.5 times, and in particular at least 2 times, the height (H8).

13. Method for operating a fish lift (1)
**characterized in that**
the fish lift (1) is designed according to at least one of the preceding claims, and
- a sluice outlet (9) and a sluice inlet (11) of the fish lift (1) are closed,
- the floating container (59) is pressed against the retaining means (62) stopping upwards movement by supplying water in the hoistway (6) to an upper position (S5), and
- water is pushed into the inner space (22) of the hoistway (6) under the container (7) by the pump device (202), so that water flows through an annular gap (R) arranged between the container (7) and the hoistway (6) past the floating container (59) upwards out of the hoistway (6) so that dirt is rinsed out.

14. Method for operating a fish lift (1) in the event of flooding, wherein the fish lift (1) is, in particular, designed according to at least one of the preceding claims 1 to 12,
**characterized in that**
- a sluice inlet (11) of the fish lift (1) is closed to lower the floating container (59) from its upper position (S3), and a discharge and rinsing channel (40) is opened,
- the floating container (59) is lowered in the hoistway (6) until the it reaches the lower position (S5), both through discharge of water into the downstream side (5) via the discharge and rinsing channel (40), as well as through water which is pumped out of the inner space (22) of the hoistway (6) through a pump device (202),
- after the floating container (59) has reached the lower position (S5), the pump device (202) remains active at least to such an extent that the floating container (59) is held in its lower position (S5) until the container (7) is raised again or until the downstream side (5) has sunk below a flood level.

## Revendications

1. Ascenseur à poissons (1 a, 1 a, 1 b, 1 c) pour le transport de poissons (2) entre un cours amont (3) d'un barrage (4) et un cours aval (5) du barrage (4), comprenant
- un puits (6) et un récipient (7),
- le puits (6) comprenant une ouverture inférieure (10), avec une entrée à écluse inférieure (11), se trouvant en dessous d'un niveau (N5 ; N5') du cours aval (5),
- le récipient (7) étant mobile entre une position supérieure (S3) et une position inférieure (S5),
- le récipient (7) étant conçu comme un récipient flottant (59),
- le récipient flottant (59) flottant, sur son trajet entre la position supérieure (S3) et la position inférieure (S5), dans un volume d'eau (V6) piégé dans le puits (6) sous le récipient (7),
- le récipient (7) étant abaissé par évacuation d'eau hors du volume d'eau (V6) piégé dans le puits (6) et le récipient (7) étant soulevé par introduction d'eau au volume d'eau (V6) piégé dans le puits (6),
- l'ascenseur à poissons (1) comprenant un dispositif de pompage (202),
- le dispositif de pompage (202) comprenant une pompe mécanique (203), une première conduite (204) pour une liaison de la pompe (203) avec le puits (6) et une deuxième conduite (205) pour une liaison de la pompe (203) avec un environnement (U4) du barrage (4),
**caractérisé en ce que**
- le dispositif de pompage (203) est conçu comme un dispositif supplémentaire (201) qui est conçu comme un dispositif d'évacuation d'eau ou comme un dispositif d'évacuation d'eau et un dispositif d'introduction d'eau, le dispositif d'évacuation d'eau restant hors service dans le cas d'un niveau moyen (N5) du cours aval (5),
- la première conduite (204) débouchant, dans une zone de fond (69') du puits (6), dans le puits (6) et
- **en ce que** la deuxième conduite (21) ou la zone de flottaison (21') débouche dans l'environnement (U4) et plus particulièrement dans le cours aval (5) ou dans le cours amont (3).

2. Ascenseur à poissons (1, 1a, 1b, 1c) selon la revendication 1, **caractérisé en ce que** le dispositif de pompage (202) est conçu, en ce qui concerne ses performances, de façon à ce qu'un débit volumique est évacué par celui-ci hors du volume d'eau (V6) piégé dans le puits (6), qui est supérieur à un débit volumique qui s'écoule du cours amont (3) vers le volume d'eau piégé (V6) et/ou **en ce que** le dispositif de pompage (202) est conçu, en ce qui concerne ses performances, de façon à ce qu'un débit volumique est introduit par celui-ci dans le volume d'eau (V6) piégé dans le puits (6), qui est supérieur à un débit volumique qui s'écoule hors du volume d'eau piégé (V6) vers le cours aval (5).

3. Ascenseur à poissons (1, 1a, 1b, 1c) selon au moins l'une des revendications précédentes, **caractérisé en ce que** le récipient flottant (59) présente une flottabilité qui est dimensionnée de façon à ce qu'un espace de transport (14) du récipient (7) est rempli à plus de 50 % et plus particulièrement à plus de 70 % avec de l'eau.

4. Ascenseur à poissons (1, 1a, 1b, 1c) selon au moins l'une des revendications précédentes, **caractérisé en ce que** la pompe (203) est conçue pour la formation du dispositif d'évacuation d'eau sous la forme d'une pompe d'aspiration et/ou **en ce que** la pompe est conçue pour la formation du dispositif d'introduction d'eau sous la forme d'une pompe de compression.

5. Ascenseur à poissons (1, 1a, 1b, 1c) selon au moins l'une des revendications précédentes, **caractérisé en ce que** le puits (6) comprend une ouverture (8), avec une entrée à écluse supérieure (9) se trouvant sous un niveau (N3) du cours amont (3).

6. Ascenseur à poissons (1, 1a, 1b, 1c) selon au moins l'une des revendications précédentes, **caractérisé en ce que** l'ascenseur à poissons (1) comprend un moyen de retenue supérieur (62), le récipient (7) s'appuyant, dans la position supérieure (S3), contre le moyen de retenue supérieur (62), de façon à ce qu'il ne puisse plus se déplacer vers le haut, moyennant quoi, entre le récipient (7) et une paroi interne du puits (6), est réalisée un interstice annulaire (R), à travers lequel de l'eau sort du volume d'eau piégé (V6) vers le haut en longeant le récipient (7) lorsque le dispositif de pompage (202) comprime l'eau sous le récipient (7) vers un espace interne (22) du puits (6).

7. Ascenseur à poissons (1, 1a, 1b, 1c) selon au moins l'une des revendications précédentes, **caractérisé en ce que** l'ascenseur à poissons (1) comprend moyen de butée (91), un moyen de blocage (92) du moyen de butée (91) étant mobile entre une position de blocage et une position de déblocage, le moyen de butée (91) bloquant le récipient (7) dans sa position inférieure (S5) lorsque son moyen de blocage (92) est dans sa position de blocage, le moyen de butée (91) comprenant, en tant que moyen de blocage (92), plus particulièrement un ou plusieurs poussoirs (93) et/ou cliquets de blocage et le moyen de blocage (92) du moyen de butée (91) pouvant être actionné plus particulièrement de manière électrique ou hydraulique.

8. Ascenseur à poissons (1, 1a, 1b, 1c) selon au moins l'une des revendications précédentes, **caractérisé en ce que** le récipient (7) comprend deux ouvertures latérales (19, 20) et une ouverture supérieure (65), la première ouverture latérale (19) étant orientée vers l'ouverture supérieure (8) du puits (6) et la deuxième ouverture latérale (20) étant orientée vers l'ouverture inférieure (10) du puits (6).

9. Ascenseur à poissons (1, 1a, 1b, 1c) selon au moins l'une des revendications précédentes, **caractérisé en ce que** le récipient (7) est guidé de manière anti-rotative dans le puits (6) par des moyens de guidage, qui sont conçus plus particulièrement sous la forme de rails (12, 13).

10. Ascenseur à poissons (1a, 1b) selon l'une des revendications précédentes, **caractérisé en ce que** le puits (6) comprend, entre l'ouverture inférieure (10) conduisant au cours aval (5) et l'ouverture supérieure (8) conduisant au cours amont (3), au moins une autre ouverture (10a, 10b) pouvant être fermée, qui conduit au cours aval (5) et/ou comprend, au-dessus de l'ouverture supérieure (8) conduisant au cours amont (3), une autre ouverture, pouvant être fermée, qui conduit au cours amont (3).

11. Ascenseur à poissons (1a, 1 b) selon la revendication 8, **caractérisé en ce que** le récipient (7) comprend, plus particulièrement au-dessus de ses ouvertures latérales opposées (19, 20), au moins une autre ouverture (20a), qui est orientée vers une des autres ouvertures (10a) du puits (6), plus particulièrement de façon à être opposée à celle-ci dans la position supérieure (S3, AS4) du récipient (7) et à ce que le cours amont (3) soit accessible par l'intermédiaire de celle-ci et/ou qui est orientée vers une des autres ouvertures du puits (6), plus particulièrement de façon à être opposée à celle-ci dans la position inférieure (S5, AS1) du récipient (7) à ce que le cours aval (5) soit accessible par l'intermédiaire de celle-ci.

12. Ascenseur à poissons (1c) selon l'une des revendications 1 à 11, **caractérisé en ce que** l'ouverture (20) du récipient (7) et l'ouverture (10) du puits (6), qui correspondent entre elles, présentent des hauteurs (H20, H10) et **en ce que** l'ouverture (19) du récipient (7) et l'ouverture (8) du puits (6), qui correspondent entre elles, présentent des hauteurs (H19, H8), la hauteur (H20) étant égale à 1,5 fois et plus particulièrement au moins égale à 2 fois la hauteur (H19) et la hauteur (H10) étant égale à 1,5 fois et plus particulièrement au moins égale à au moins 2 fois la hauteur (H8).

13. Procédé d'exploitation d'un ascenseur à poissons (1), **caractérisé en ce que** l'ascenseur à poissons (1) est conçu selon au moins une des revendications précédentes et **en ce que**
- une sortie d'écluse (9) et une entrée d'écluse (11) de l'ascenseur à poissons (1) sont fermées,
- le récipient flottant (59) est comprimé par l'introduction d'eau dans le puits (6) jusqu'à une supérieure (S5) contre un moyen de retenue (62) arrêtant le mouvement ascendant et
- un dispositif de pompage (202) comprime encore de l'eau dans un espace interne (22) du puits (6) sous le récipient (7) de façon à ce que de l'eau soit comprimée à travers un interstice annulaire (R), disposé entre le récipient (7) et le puits (6), le long du récipient flottant (59), vers le haut hors du puits (6), de façon à ce que les saletés soient éliminées.

14. Procédé d'exploitation d'un ascenseur à poissons (1) en cas de crue, l'ascenseur à poissons (1) étant conçu plus particulièrement selon au moins l'une des revendications précédentes 1 à 12, caractérisé en ce quelles
- pour l'abaissement du récipient flottant (59) hors de sa position supérieure (S3), une entrée d'écluse (11) de l'ascenseur à poissons (1) est fermée et un canal d'évacuation et de rinçage (40) est ouvert,
- le récipient flottant (59) étant abaissé dans le puits (6) jusqu'à une position inférieure (S5) aussi bien par évacuation de l'eau vers le cours aval (5) par l'intermédiaire du canal d'évacuation et de rinçage (40) que par de l'eau qui est pompée par un dispositif de pompage (202) hors de l'espace interne (22) du puits (6) sous le récipient flottant (59),
- le dispositif de pompage (202) reste actif, une fois que le récipient flottant (59) a atteint la position inférieure (S5) de façon à ce que le récipient flottant (59) soit maintenu dans sa position inférieure (S5) jusqu'à ce qu'un soulèvement du récipient (7) soit à nouveau prévu ou jusqu'à ce que le cours aval (5) ait baissé en dessous d'un niveau de crue.
